**Europäisches Patentamt**

**European Patent Office**

**Office européen des brevets**

(19)

(11) Veröffentlichungsnummer: **0 400 416 B1**

(12) # EUROPÄISCHE PATENTSCHRIFT

(45) Veröffentlichungstag der Patentschrift: **17.08.94**

(51) Int. Cl.5: **C08F 246/00**, C08F 220/04, C08F 218/16

(21) Anmeldenummer: **90109438.3**

(22) Anmeldetag: **18.05.90**

(54) **Stark dilatante Copolymerdispersionen mit hoher Dauerlastbeständigkeit.**

(30) Priorität: **30.05.89 DE 3917456**

(43) Veröffentlichungstag der Anmeldung:
**05.12.90 Patentblatt 90/49**

(45) Bekanntmachung des Hinweises auf die
Patenterteilung:
**17.08.94 Patentblatt 94/33**

(84) Benannte Vertragsstaaten:
**BE DE ES FR GB IT NL SE**

(56) Entgegenhaltungen:
**EP-A- 0 043 464**
**EP-A- 0 174 566**
**DE-A- 1 928 611**

(73) Patentinhaber: **BASF Aktiengesellschaft
Carl-Bosch-Strasse 38
D-67063 Ludwigshafen (DE)**

(72) Erfinder: **Schmidt, Franz, Dr.
Trommstrasse 3
D-6800 Mannheim 1 (DE)**
Erfinder: **Bung, Richard, Dr.
Rheinrugenstrasse 49
D-6700 Ludwigshafen (DE)**
Erfinder: **Laun, Martin, Dr.
Duererstrasse 22
D-6700 Ludwigshafen (DE)**
Erfinder: **Louis, Gerd, Dr.
Am Talhaus 21
D-6719 Carlsberg (DE)**

**Beschreibung**

Die Erfindung betrifft eine stark dilatante Copolymerdispersion, die als wesentliche Komponente ein Emulsionscopolymerisat enthält, das hergestellt ist aus 1 bis 10 Gew.-%, bezogen auf die eingesetzten Monomeren, von $\alpha,\beta$-monoolefinisch ungesättigten Carbonsäuren und anderen olefinisch ungesättigten Monomeren.

Solche stark dilatanten Copolymerdispersionen sind an sich bekannt aus EP-B 174 566. Es handelt sich dabei um eine Klasse von Copolymerdispersionen, die bei der Einwirkung von Scherkräften bei einer kritischen Schergeschwindigkeit in bestimmter Weise sprunghaft viskoser werden, d.h. verdicken. Dieser spezielle Dilatanzsprung unterscheidet die stark dilatanten Copolymerdispersionen von schwach dilatanten Dispersionen, wie sie z.B. aus DE-B 1 928 611 als Rohstoff für Latexfarben bekannt sind.

Die bekannten stark dilatanten Copolymerdispersionen sind jedoch weiter verbesserungsbedürftig. Werden diese Dispersionen einer wiederholten bzw. dauernden Scherbeanspruchung ausgesetzt, schwächt sich der Dilatanzsprung ab, so daß keine dauerlaststabilen Flüssigkeitskupplungen, Schwingungsdämpfer oder Drehzahlbegrenzer mit solchen Dispersionen als Drehmomentübertragungsmedium herstellbar sind.

Aufgabe der vorliegenden Erfindung war es daher, eine stark dilatante Copolymerdispersion mit hoher Dauerlastbeständigkeit bereitzustellen.

Demgemäß wurde eine stark dilatante Copolymerdispersion, die als wesentliche Komponente ein Emulsionscopolymerisat enthält, das hergestellt ist aus 1 bis 10 Gew.-%, bezogen auf die eingesetzten Monomeren, von $\alpha,\beta$-monoolefinisch ungesättigten Carbonsäuren und anderen olefinisch ungesättigten Monomeren, wobei man das Emulsionscopolymerisat in Gegenwart von 5 bis 30 Gew.-%, bezogen auf die eingesetzten Monomeren, eines Carbonsäureallyl- oder Carbonsäurealkylallylesters mit 2 oder mehr copolymerisierbaren olefinischen Doppelbindungen oder deren Gemisch herstellt, wobei der Alkylrest 1 bis 4 C-Atomen enthält, gefunden.

Bevorzugte Ausführungsformen und ein Verfahren zur Herstellung sind den Unteransprüchen zu entnehmen.

Eine stark dilatante Copolymerdispersion verdickt bei der Einwirkung von Scherkräften bei einer bestimmten Schergeschwindigkeit $\gamma_k$ - der kritischen Schergeschwindigkeit, die im allgemeinen im Bereich von 0,1 bis $10^4$ $sec^{-1}$ liegt, - sprunghaft unter Zunahme der Viskosität um mindestens das 100fache. Diese Verdickung (Dilatanzsprung) ist reversibel, d.h. beim Unterschreiten des kritischen Wertes wird die Copolymerdispersion wieder niedrigviskos. Mit anderen Worten: stark dilatante Dispersionen zeigen in einem engen Schergeschwindigkeitsbereich einen Viskositätsanstieg entsprechend

$$\frac{d \ln \tau}{d \ln \gamma} \geq 10 \, ,$$

wobei die Schubspannung $\tau$ mit wachsender Schergeschwindigkeit $\gamma$ insgesamt um den Faktor F > 100, in besonderen Fällen F > 1000, zunimmt. Der Schubspannungsbereich der kritischen Schergeschwindigkeiten derartiger Dispersionen liegt im allgemeinen im Bereich von $10^3$ bis $10^6$ Pa.

Der zeitliche Anstieg der Schubspannung erfolgt erfahrungsgemäß bei nur kleiner Überschreitung von $\gamma_k$ innerhalb von $10^{-3}$ bis $10^{-2}$ sec. Bei Unterschreiten der selben kritischen Schergeschwindigkeit $\gamma_k$ relaxiert die Schubspannung nach Belastung üblicherweise von selbst im Bereich von $10^{-2}$ bis $10^{-1}$ sec.

Die erfindungsgemäße Copolymerdispersion enthält als wesentliche Komponente ein Emulsionscopolymerisat.

Dieses wird hergestellt aus einer Monomermischung, die 1 bis 10, bevorzugt 3 bis 8 Gew.-%, bezogen auf die eingesetzte Monomermischung, einer $\alpha,\beta$-monoolefinisch ungesättigten Carbonsäure enthält. Es handelt sich üblicherweise um Mono- und/oder Dicarbonsäuren. Als derartige Carbonsäuren kommen vor allem Acryl- und/oder Methacrylsäure sowie Maleinsäure, Itakonsäure und Fumarsäure, ferner Monoester derartiger Dicarbonsäuren mit meist 1 bis 4 C-Atomen enthaltenden Alkanolen, z.B. Maleinsäuremonomethylester, Fumarsäuremonoethylester und Itakonsäure-n-butylester in Frage. Die Mono- und Dicarbonsäuren (einschließlich der Halbester) der genannten Art enthalten im allgemeinen 3 bis 9 C-Atome. Von besonderem Interesse sind Acrylsäure, Methacrylsäure und Maleinsäure.

Als olefinisch ungesättigte Monomere kommen einmal solche in Frage, die Polymere oder Copolymere mit einer Glastemperatur von über 50°C, bevorzugt über 75°C ergeben. Beispiele sind vinylaromatische Polymere wie Styrol, $\alpha$-Methylstyrol, p-Methylstyrol, Halogenstyrole wie Chlorstyrol oder Methylmethacrylat. Diese Monomeren oder deren Gemische werden bevorzugt in Mengen von 40 bis 94 Gew.-%, bezogen auf

EP 0 400 416 B1

die Summe aller eingesetzten Monomeren, verwendet. Gute Erfolge werden mit 60 bis 85 Gew.-%, bezogen auf die Summe der eingesetzten Monomeren, an vinylaromaten wie Styrol erzielt.

Darüber hinaus können auch weitere, mit den obigen Monomeren copolymerisierbare Monomere in Mengen bis 40 Gew.-%, bezogen auf die Summe der eingesetzten Monomeren, verwendet werden.

In Frage kommen nitrilgruppenhaltige Monomere wie Acrylnitril oder Methacrylnitril, die von 0 bis 15 Gew.-%, bezogen auf die Summe der eingesetzten Monomeren, verwendet werden können.

Weiterhin können 0 bis 20 Gew.-%, bezogen auf die Summe der eingesetzten Monomeren, monoolefinisch ungesättigte Carbonsäureester, insbesondere Acrylester von 1 bis 10, bevorzugt 1 bis 4 C-Atomen enthaltenden Alkanolen, Methacrylester von 2 bis 10, bevorzugt 2 bis 4 C-Atomen enthaltenden Alkanolen sowie Vinylester von meist 2 bis 12 C-Atomen enthaltenden geradkettigen oder verzweigten aliphatischen Carbonsäuren eingesetzt werden. Beispiele für derartige olefinisch ungesättigte Ester sind vor allem die Ester des Methanols, Ethanols, n-Propanols, n-Butanols, Isobutanols, tert.-Butanols und 2-Ethylhexylalkohols der Acryl- und Methacrylsäure, wie Ethylacrylat und -methacrylat, n-Butylacrylat und -methacrylat, Isobutylacrylat und -methacrylat, tert.-Butylacrylat und -methacrylat sowie Methylacrylat. Geeignete vinylester sind vor allem Vinylacetat, Vinylpropionat und Vinyl-n-butyrat. Gute Erfolge werden mit der Zugabe von 1 bis 6 Gew.-%, bezogen auf die Summe der eingesetzten Monomeren, Ethylacrylat erzielt.

Darüber hinaus kommen Amide von $\alpha,\beta$-ungesättigten Carbonsäuren, vorzugsweise in Mengen von 1 bis 5 Gew.-%, bezogen auf die Summe der eingesetzten Monomeren, als zusätzliche Monomere in Frage. Beispiele sind insbesondere Methacrylamid, daneben aber auch Acrylamid und deren am Stickstoff mit $C_1$- bis $C_{10}$-Alkylgruppen oder Methylolgruppen substituierten Derivate.

Weiterhin können bis zu 3 Gew.-%, bezogen auf die Summe der eingesetzten Monomeren von mehrfach reaktiven Monomeren zugesetzt werden. Es kann sich dabei um Monomere mit mehreren olefinischen Doppelbindungen handeln, beispielsweise um Divinylbenzol, Butandioldiacrylat, Trimethylolpropantriacrylat oder um olefinische Monomere mit einer anderen reaktiven Gruppe wie Glycidyl(meth)acrylat.

Erfindungswesentlich ist die Verwendung von 5 bis 30, bevorzugt 5 bis 20 und insbesondere 10 bis 20 Gew.-%, bezogen auf die Summe der eingesetzten Monomeren, eines Carbonsäureallylesters oder Carbonsäurealkylallylesters, die zwei oder mehr copolymerisierbare Doppelbindungen aufweisen, oder eines Gemisches daraus. Der Alkylrest im Carbonsäurealkylallylester hat 1 bis 4 C-Atome, bevorzugt ist Methyl. Beispielhaft seien genannt: Alkylallylester von mehrbasischen, aromatischen oder aliphatischen Carbonsäuren, wie Diallylphthalat, Dimethallylphthalat, Diallylisophthalat, Dimethallylisophthalat, Diallylterephthalat, Dimethallylterephthalat, Triallyltrimellitat, Trimethallyltrimellitat, Diallyladipat, Dimethallyladipat, Diallylsebacat und Dimethallylsebacat. Gut geeignet ist Diallylphthalat. Die bevorzugten Allylester oder Alkylallylester sind aus der Gruppe Allylacrylat, Alkylallylacrylat, Allylalkylacrylat und Alkylallylalkylacrylat oder einem Gemisch daraus ausgewählt wobei die Alkylgruppen unabhängig voneinander bis zu 4 C-Atome aufweisen. Eingesetzt werden können auch Allylester oder Methallylester der Cyanursäure. Weiterhin seien genannt Alkylallylester oder Allylester von $\alpha,\beta$-ungesättigten ein- oder mehrbasischen Carbonsäuren wie Allylacrylat, Methallylacrylat, Allylmethacrylat, Methallylmethacrylat, Mono- oder Diallylester oder Mono- oder Dimethallylester von Malein-, Fumar- oder Itakonsäure. Bewährt haben sich Diallylphthalat, Triallyltrimellitat, Allylmethacrylat und insbesondere Allylacrylat und Methallylmethacrylat sowie Kombinationen davon. Die Zusammensetzung der Monomeren wird im allgemeinen so gewählt, daß die Glastemperatur des Emulsionscopolymerisates oberhalb von 50°C, bevorzugt oberhalb von 75°C, liegt.

Zur Herstellung des Emulsionscopolymerisates können die üblichen Verfahren zur Emulsionspolymerisation in wäßriger Phase wie Batch- oder Zulaufverfahren herangezogen werden. Es wird üblicherweise bei 60 bis 95°C in Gegenwart von bis zu 0,5 Gew.-% anionischem Emulgator, bis zu 1 Gew.-%, jeweils bezogen auf die Summe der eingesetzten Monomeren, nichtionischen Emulgator, üblichen Mengen Radikalstarter und gegebenenfalls Regler gearbeitet. Die Ausgangsstoffe können bei Beginn der Reaktion vorgelegt werden oder einzeln oder als Gemisch ganz oder teilweise während der Reaktion kontinuierlich oder diskontinuierlich zugegeben werden. Bewährt hat sich auch die bekannte Saatfahrweise, wobei mit Vorteil Emulgator, Wasser, Monomeres und/oder Radikalstarter zudosiert werden. Dabei werden die Monomeren auf einen vorpolymerisierten Latex mit einer Teilchengröße zwischen 30 bis 200 nm, vorzugsweise 70 bis 150 nm, ohne wesentliche Teilchenneubildung aufpolymerisiert.

Auch das in DE-B 3 025 562 beschriebene Polymerisationsverfahren unter gleichzeitigem Agglomerieren führt zu guten Ergebnissen, insbesondere wenn kleine kritische Schergeschwindigkeiten angestrebt werden.

Als Emulgator seien Alkyl- oder Alkarylsulfonate genannt, die bevorzugt in Mengen von 0,15 bis 0,5 Gew.-%, bezogen auf die Summe der eingesetzten Monomeren, eingesetzt werden. Als Radikalstarter kommen die üblichen wasserlöslichen Initiatoren wie Alkali- oder Ammoniumsalze der Peroxodischwefelsäure oder auch Redoxsysteme wie Ascorbinsäure/tert.-Butylhydroperoxid in Frage.

3

Die Emulsionspolymerisation wird im allgemeinen so geführt, daß eine Dispersion mit einem Feststoffgehalt von etwa 35 bis 58, vorzugsweise 40 bis 55 Gew.-%, resultiert.

Das erhaltene Emulsionscopolymerisat hat im allgemeinen eine zahlenmittlere Teilchengröße zwischen etwa 200 und 1000 nm, bevorzugt zwischen 250 und 500, insbesondere zwischen 260 und 400 nm.

Die erfindungsgemäße Copolymerdispersion kann neben dem Emulsionscopolymerisat noch weitere Zusätze enthalten.

Dabei handelt es sich vorzugsweise um 0,1 bis 30, insbesondere 10 bis 25 Gew.-Teile, bezogen auf 100 Gew.-Teile des Feststoffes des Emulsionscopolymerisates, an Oxiden, Hydroxiden, Carbonaten und/oder wasserlöslichen Salzen ein- oder zweiwertiger Metalle. Geeignete Metallverbindungen sind vor allem Magnesiumoxid und -hydroxid, Calciumoxid und -hydroxid, Zinkoxid und -hydroxid, Magnesiumsulfat und -acetat, Calciumacetat, Zinkammoniumcarbonat, Zinkacetat, Calciumcarbonat, Lithiumacetat und Lithiumhydroxid, ferner Aluminiumhydroxid, Strontiumoxid und -hydroxid, Bariumoxid und -hydroxid sowie Chloride und Sulfate des Lithiums, Natriums und Kaliums. Bewährt haben sich Magnesiumhydroxid, Calciumhydroxid, Zinkoxid und Zinkammoniumcarbonat, insbesondere Lithiumoxid, Lithiumhydroxid und Lithiumchlorid. Es können auch Gemische dieser Verbindungen eingesetzt werden.

Gute Ergebnisse werden erzielt, wenn die erfindungsgemäßen stark dilatanten Copolymerdispersionen ein organisches Peroxid oder Hydroperoxid enthalten, deren Zerfallstemperaturen für eine Halbwertszeit von 1 Stunde über 130°C, vorzugsweise über 150°C, gemessen in 0,2 molarer Lösung in Benzol, liegen. Solche Peroxide oder Hydroperoxide sind an sich bekannt aus Enzyklopädia of Polymer Science and Engineering, Band 11 (1988), Seite 1 bis 21. Beispielhaft seien genannt Dicumylperoxid, Ditertiärbutylperoxid, Pinanhydroperoxid, Cumolhydroperoxid und tert.-Butylhydroperoxid. Besonders bewährt haben sich Cumolhydroperoxid und tert.-Butylhydroperoxid. Ihr Zusatz zum Emulsionspolymerisat kann vor, während oder nach der Polymerisation erfolgen. Wesentlich ist es, daß diese Stoffe in der stark dilatanten Copolymeridispersion in einer Menge von 0,05 bis 1, bevorzugt 0,3 bis 0,8 Gew.-Teilen, bezogen auf 100 Gew.-Teile des Feststoffes des Emulsionspolymerisates, enthalten sind.

Die erfindungsgemäße stark dilatante Copolymerdispersion weist üblicherweise einem Gehalt an festem Polymerisat von 45 bis 65, bevorzugt 53 bis 63 Gew.-% auf. Dieses feste Polymerisat wird der Einfachheit halber mit dem Feststoff der ursprünglichen Dispersion des Emulsionscopolymerisates gleichgesetzt. Das Verhältnis von fester zu flüssiger Phase liegt in der erfindungsgemäßen Copolymerdispersion im allgemeinen über dem entsprechenden Wert der ursprünglichen Dispersion des Emulsionscopolymerisates. Dieses Verhältnis kann in bekannter Weise eingestellt werden, beispielsweise durch Abdestillieren von Wasser, vorzugsweise im Vakuum. Man kann auch aus dem Emulsionscopolymerisat durch Sprüh- oder Gefriertrocknen Pulver gewinnen und diese in Wasser oder anderen flüssigen Medien redispergieren. In manchen Einsatzgebieten ist es erwünscht, als Dispergiermedium mehrwertige Alkohole wie Glykole, Diglykole, Triglykole oder Formamid, bevorzugt Ethylenglykol oder Glyzerin oder Mischungen davon mit Wasser zu benutzen. Hierfür eignet sich ebenfalls das Abdestillieren von Wasser und Zugabe der gewünschten Mengen an mehrwertigen Alkoholen. Bevorzugt enthält die flüssige Phase der erfindungsgemäßen Copolymerdispersion mehr als 30, insbesondere 30 bis 70 Gew.-%, bezogen auf die flüssige Phase, an Wasser.

Falls der pH-Wert der erfindungsgemäßen Copolymerdispersion auf einen bestimmten Wert, der üblicherweise zwischen 4 und 10 liegt, eingestellt werden soll, so können die üblichen Verfahren, wie beispielsweise Zugabe von Ammoniak, Alkali oder Erdalkalioxiden oder -hydroxiden oder der Zusatz von schwachen Säuren verwendet werden.

Die erfindungsgemäße stark dilatante Copolymerdispersion zeichnet sich vor allem dadurch aus, daß sie bei guter Temperaturstabilität eine hohe Dauerlastbeständigkeit aufweist.

Dies ist besonders beim Einsatz derartiger erfindungsgemäßer Copolymerisatdispersionen als Drehmomentübertragungsmedium in Schwingungsdämpfern, Drehzahlbegrenzern oder hydraulische Kupplungen von Vorteil, da dann ein konstanter Dauereinsatz möglich ist.

Beispiele

Die in den Beispielen genannten Teile und Prozente beziehen sich auf das Gewicht. Alle Polymerisationen wurden in Rührgefäßen ausgeführt, die mit Heiz- bzw. Kühleinrichtungen, Rührern und Zulaufgefäßen ausgestattet waren.

Allgemeine Arbeitsvorschrift:

Im Polymerisationsgefäß werden die Vorlage (s. Tabelle 1), 7 Teile des in Tabelle 1 genannten Zulaufs 1 und 1 Teil des in Tabelle 1 aufgeführten Zulaufs 2 vorgelegt und gemischt.

Der Ansatz wird unter Rühren auf 80°C erhitzt, wobei die Polymerisation anspringt. Nach 30 Minuten bei 80°C werden dann die Reste der Zuläufe 1 und 2 gleichmäßig innerhalb 3 Stunden zugegeben, anschließend wird weitere 2 Stunden bei 80°C gerührt. Schließlich wird der Ansatz abgekühlt und abgelassen.

Feststoffgehalt, Teilchengröße und pH-Wert der resultierenden Dispersionen werden ebenfalls in Tabelle 1 angegeben.

Tabelle 1

| Beispiele | 1 | 2 | 3 | 4 | 5 | 6 | 7 | 8 | 9 | VA | VB |
|---|---|---|---|---|---|---|---|---|---|---|---|
| | [Teile] | | | | | | | | | | |
| **Vorlage:** | | | | | | | | | | | |
| Wasser | 17 | 17 | 17 | 17 | 17 | 17 | 17 | 17 | 17 | 17 | 17 |
| 50%iger Saatlatex aus 70% Styrol und 30 % Butadien mit einem Teilchendurchmesser von 120 nm | 1,6 | | | 1,6 | 1,6 | 1,6 | 1,6 | 1,6 | 1,6 | 1,6 | |
| Diallylphthalat | 4 | | 2 | | | 4 | 4 | | | | |
| Cumolhydroperoxid (80%ig) | 0,3 | 0,3 | 0,24 | 0,12 | 0,3 | 0,3 | 0,3 | 0,3 | 0,3 | | |
| Di-Natrium-dodecyldiphenylether-disulfonat (45%ig) | 0,09 | | | | 0,09 | 0,09 | 0,09 | 0,09 | 0,09 | | |
| **Zulauf 1** | | | | | | | | | | | |
| Wasser | 25,5 | 25,5 | 25,5 | 25,5 | 25,5 | 25,5 | 25,5 | 25,5 | 25,5 | 25,5 | 25,5 |
| Emulgator (wie in Vorlage) | 0,27 | 0,27 | 0,27 | 0,27 | 0,27 | 0,27 | 0,27 | 0,27 | 0,27 | 0,27 | 0,8[1] |
| Styrol | 30,4 | 29,2 | 29,2 | 26,8 | 28 | 28 | 28 | 28 | 31,2 | 36,4 | 32 |
| Ethylacrylat | 0,8 | | 2 | 2,4 | 1,2 | 1,2 | 1,2 | 1,2 | | 0,8 | 4,8 |
| Diallylphthalat | 2 | 8 | 4 | 8 | | | | | | | |
| Triallyltrimellitat | | | | | | | | | | | |
| Methallylmethacrylat | | | | | | | | 4 | 4 | | |
| Allylacrylat | | | | | 8 | | 4 | 4 | 4 | | |
| Allylmethacrylat | | | | | | 4 | | | | | |
| Acrylsäure | 2 | 2 | 2 | 2 | 2 | 2 | 2 | 2 | 2 | 2 | 1,2 |
| Methacrylamid | 0,8 | 0,8 | 0,8 | 0,8 | 0,8 | 0,8 | 0,8 | 0,8 | 0,8 | 0,8 | 1,2 |
| Maleinsäure | | | | | | | | | | | 0,8 |
| Butandioldiacrylat | | | | | | | | | | | 0,4[2] |

Tabelle 1   – Forts. –

| Beispiele | 1 | 2 | 3 | 4 | 5 | 6 | 7 | 8 | 9 | VA | VB |
|---|---|---|---|---|---|---|---|---|---|---|---|
| [Teile] | | | | | | | | | | | |
| Zulauf 2 | | | | | | | | | | | |
| Wasser | 7 | 7 | 7 | 7 | 7 | 7 | 7 | 7 | 7 | 7 | 7 |
| Natriumperoxodisulfat | 0,28 | 0,28 | 0,28 | 0,28 | 0,28 | 0,28 | 0,28 | 0,28 | 0,28 | 0,28 | 0,28 |
| Festtoffgehalt [%] (DIN 53 189, 1972, Teil C) | 43,2 | 43,1 | 40,2 | 42,4 | 43,1 | 42,7 | 42,3 | 43,0 | 44,2 | 43,9 | 40,5 |
| Teilchengröße [nm] | 302 | 338 | 353 | 351 | 321 | 306 | 297 | 320 | 292 | 355 | 420 |
| pH-Wert | 3,7 | 3,5 | 3,2 | 3,2 | 4,2 | 4,4 | 4,1 | 4,1 | 4,4 | 4,2 | |

1) Natriumlaurylsulfat (15%ig)
2) Wurde dem Zulauf 1 nach 1,5 Stunden Zulaufzeit zugegeben

Nach der Polymerisation werden aus den erhaltenen Dispersionen durch Gefriertrocknung Pulver hergestellt. Zur rheologischen Prüfung werden jeweils 100 Teile gefriergetrocknetes Pulver (Restwassergehalt 2 bis 3 %) in 62 Teilen eines wäßrigen Dispergiermittels, das 12,35 Teile Lithiumchlorid und 0,87 Teile Lithiumhydroxid enthält, redispergiert.

Alle Proben werden in einem Lastviskosimeter zunächst 5 Minuten mit einer Schubspannung von 0,5 x $10^5$ Pa belastet. Dann wird die kritische Schergeschwindigkeit und die maximale Schubspannung gemessen.

Anschließend wird die Probe mit längeren Scherzeiten und höheren Schubspannungen vorbelastet, worauf dann erneut die kritische Schergeschwindigkeit und die maximale Schubspannung gemessen werden.

Wie die in der Tabelle 2 zusammengefaßten Prüfergebnisse ausweisen, zeichnen sich die erfindungsgemäßen Dispersionen durch eine sehr hohe Dauerlastbeständigkeit aus: die im Dilatanzsprung maximal erreichte Schubspannung ist weitgehend unabhängig von der Vorbelastung.

Tabelle 2

| Beispiel | Vorbelastung | | Dilatanz nach Vorbelastung | |
|---|---|---|---|---|
| | Schubspannung $10^5$ Pa | Dauer Minuten | Kritische Schergeschwindigkeit $s^{-1}$ | Maximale Schubspannung $10^5$ Pa |
| Vergl.-Beisp. A | 0,5<br>0,8 | 5<br>70 | 20<br>10 | 1,2<br>0,3 |
| Vergl.-Beisp. B | 0,5<br>0,7 | 5<br>16 | 20<br>nicht meßbar | 0,6<br><0,1 |
| Beispiel 1 | 0,5<br>1,6 | 5<br>120 | 50<br>50 | 1,8<br>1,8 |
| Beispiel 2 | 0,5<br>1,0<br>1,0 | 5<br>20<br>3840 | 30<br>20<br>20 | 1,3<br>1,4<br>1,4 |
| Beispiel 3 | 0,5<br>1,0 | 5<br>20 | 15<br>15 | 1,2<br>1,2 |
| Beispiel 4 | 0,5<br>1,0<br>1,0 | 5<br>20<br>90 | 25<br>25<br>25 | 1,0<br>1,0<br>1,0 |
| Beispiel 5 | 0,5<br>0,9 | 5<br>36 | 75<br>85 | 1,0<br>1,0 |
| Beispiel 6 | 0,5<br>1,2<br>1,4 | 5<br>20<br>20 | 25<br>30<br>30 | 1,4<br>1,4<br>1,4 |
| Beispiel 7 | 0,5<br>1,2<br>1,4 | 5<br>20<br>20 | 60<br>70<br>70 | 1,2<br>1,2<br>1,2 |
| Beispiel 8 | 0,5<br>1,2 | 5<br>60 | 10<br>10 | 1,9<br>1,9 |
| Beispiel 9 | 0,5<br>0,8 | 5<br>20 | 75<br>50 | 0,6<br>0,7 |

**Patentansprüche**

1. Stark dilatante Copolymerdispersion, die als wesentliche Komponente ein Emulsionscopolymerisat enthält, das hergestellt ist aus 1 bis 10 Gew.-%, bezogen auf die Summe der eingesetzten Monomeren, von $\alpha,\beta$-monoolefinisch ungesättigten Carbonsäuren und anderen olefinisch ungesättigten Monomeren, dadurch gekennzeichnet, daß man das Emulsionscopolymerisat in Gegenwart von 5 bis 30 Gew.-%, bezogen auf die Summe der eingesetzten Monomeren, eines Carbonsäureallyl- oder Carbonsäurealkylallylesters mit 2 oder mehr copolymerisierbaren olefinischen Doppelbindungen oder deren Gemisch, wobei der Alkylrest 1 bis 4 C-Atome enthält, herstellt.

**2.** Stark dilatante Copolymerdispersion nach Anspruch 1, dessen Emulsionscopolymerisat hergestellt ist aus 1 bis 10 Gew.-% α,β-monoolefinisch ungesättigten Carbonsäuren, 40 bis 94 Gew.-% vinylaromatischen Monomeren, Methylmethacrylat oder einem Gemisch daraus, 5 bis 30 Gew.-% eines Carbonsäureallyl- oder Carbonsäurealkylallylesters mit 2 oder mehr copolymerisierbaren olefinischen Doppelbindungen oder ein Gemisch daraus, wobei der Alkylrest 1 bis 4 C-Atome enthält, und 0 bis 40 Gew.-% weiterer copolymerisierbarer Monomerer, wobei die Gew.-% auf die Summe der eingesetzten Monomeren bezogen sind.

**3.** Stark dilatante Copolymerdispersion nach Anspruch 1 oder 2, in der die Allylester oder Alkylallylester ausgewählt sind aus der Gruppe Allylacrylat, Alkylallylacrylat, Allylalkylacrylat und Alkylallylalkylacrylat oder einem Gemisch daraus, wobei die Alkylgruppen unabhängig voneinander bis zu 4 C-Atome aufweisen.

**4.** Stark dilatante Copolymerdispersion nach mindestens einem der Ansprüche 1 bis 3, gekennzeichnet durch einen Gehalt von 0,05 bis 1 Gew.-Teil, bezogen auf 100 Gew.-Teile des Feststoffes des Emulsionscopolymerisates, von organischen Peroxiden, deren Zerfallstemperaturen für eine Halbwertszeit von 1 Stunde über 130°C liegen.

**5.** Stark dilatante Copolymerisatdispersion nach mindestens einem der Ansprüche 1 bis 3, gekennzeichnet durch einen Gehalt von 0,05 bis 1 Gew.-Teil, bezogen auf 100 Gew.-Teile des Feststoffes des Emulsionscopolymerisates, von organischen Hydroperoxiden, deren Zerfallstemperaturen für eine Halbwertszeit von 1 Stunde über 130°C liegen.

**6.** Stark dilatante Copolymerisatdispersion nach mindestens einem der Ansprüche 1 bis 5, gekennzeichnet durch einen Gehalt von 0,1 bis 30 Gew.-Teilen, bezogen auf 100 Gew.-Teile des Feststoffes des Emulsionscopolymerisates, an Oxiden, Hydroxiden, Carbonaten, wasserlöslichen Salzen ein- oder zweiwertiger Metalle oder Gemischen daraus.

**7.** Verfahren zur Herstellung einer stark dilatanten Copolymerdispersion gemäß mindestens einem der Ansprüche 1 bis 6, dadurch gekennzeichnet, daß das Emulsionscopolymerisat in wäßriger Emulsion aus 0,1 bis 10 Gew.-%, bezogen auf die Summe der eingesetzten Monomeren, an α,β-monoolefinisch ungesättigten Carbonsäuren, 5 bis 30 Gew.-%, bezogen auf die Summe der eingesetzten Monomeren, eines Carbonsäureallyl- oder Carbonsäurealkylallylesters mit 2 oder mehr copolymerisierbaren olefinischen Doppelbindungen oder deren Gemisch, wobei der Alkylrexst 1 bis 4 C-Atome enthält, und anderen olefinisch ungesättigten Monomeren hergestellt wird.

**Claims**

**1.** A highly dilatant copolymer dispersion containing, as essential component, an emulsion copolymer prepared from 1 to 10 % by weight, based on the sum of the monomers employed, of α,β-monoolefinically unsaturated carboxylic acids and other olefinically unsaturated monomers, wherein the emulsion copolymer is prepared in the presence of from 5 to 30 % by weight, based on the sum of the monomers employed, of an allyl carboxylate or alkylallyl carboxylate containing 2 or more copolymerizable olefinic double bonds, or a mixture thereof, the alkyl radical containing 1 to 4 C atoms.

**2.** A highly dilatant copolymer dispersion as claimed in claim 1, whose emulsion copolymer has been prepared from 1 to 10 % by weight of α,β-monoolefinically unsaturated carboxylic acids, 40 to 94 % by weight of vinyl aromatic monomers, methyl methacrylate or a mixture thereof, 5 to 3 % by weight of an allyl carboxylate or alkylallyl carboxylate, containing 2 or more copolymerizable olefinic double bonds, or a mixture thereof, the alkyl radical containing 1 to 4 C atoms and 0 to 40 % by weight of further copolymerizable monomers, the % by weight data being based on the sum of the monomers employed.

**3.** A highly dilatant copolymer dispersion as claimed in claim 1, in which the allyl ester or alkylallyl ester is selected from the series comprising allyl acrylate, alkylallyl acrylate, allylalkyl acrylate and alkylallyl alkylacrylate, or a mixture thereof, the alkyl groups, independently of one another, having up to 4 C atoms.

4. A highly dilatant copolymer dispersion as claimed in claim 1, containing from 0.05 to 1 part by weight, based on 100 parts by weight of the solid of the emulsion copolymer, of organic peroxides whose decomposition temperatures are greater than 130°C for a half life period of 1 hour.

5. A highly dilatant copolymer dispersion as claimed in claim 1, containing from 0.05 to 1 part by weight, based on 100 parts by weight of the solid of the emulsion copolymer, of organic hydroperoxides whose decomposition temperatures are greater than 130°C for a half life period of 1 hour.

6. A highly dilatant copolymer dispersion as claimed in claim 1, containing from 0.1 to 30 parts by weight, based on 100 parts by weight of the solid of the emulsion copolymer, of oxides, hydroxides, carbonates or water-soluble salts of monovalent or divalent metals, or mixtures thereof.

7. A process for the preparation of a highly dilatant copolymer dispersion as claimed in claim 1, which comprises preparing the emulsion copolymer in aqueous emulsion from 0.1 to 10 % by weight, based on the sum of the monomers employed, of $\alpha,\beta$-monoolefinically unsaturated carboxylic acids, 5 to 30 % by weight, based on the sum of the monomers employed, of an allyl carboxylate or alkylallyl carboxylate containing 2 or more copolymerizable olefinic double bonds, or a mixture thereof, the alkyl radical containing 1 to 4 C atoms, and other olefinically unsaturated monomers.

**Revendications**

1. Dispersion de copolymère à forte dilatance, qui contient, à titre de composant essentiel, un copolymère en émulsion, qui est préparé à partir de 1 à 10% en poids, rapportés à la somme des monomères mis en oeuvre, d'acides carboxyliques $\alpha,\beta$-monooléfiniquement insaturés et d'autres monomères oléfiniquement insaturés, caractérisé en ce que l'on prépare le copolymère en émulsion en présence de 5 à 30% en poids, par rapport à la somme des monomères mis en oeuvre, d'un carboxylate d'allyle, ou d'un carboxylate d'alkylallyle, qui comporte deux ou plus de deux doubles liaisons oléfiniques, copolymérisables, ou un mélange de ceux-ci, où le radical alkyle comporte de 1 à 4 atomes de carbone.

2. Dispersion de copolymère à forte dilatance suivant la revendication 1, dont le copolymère en émulsion est préparé à partir de 1 à 10% en poids d'acides carboxyliques $\alpha,\beta$-monooléfiniquement insaturés, 40 à 94% en poids de monomères vinylaromatiques, de méthacrylate de méthyle, ou d'un mélange de ceux-ci, de 5 à 30% en poids d'un carboxylate d'allyle, ou d'un carboxylate d'alkylallyle, qui comporte deux ou plus de deux doubles liaisons oléfiniques, copolymérisables, ou un mélange de ceux-ci, où le radical alkyle contient de 1 à 4 atomes de carbone et de 0 à 40% en poids d'autres monomères copolymérisables, où les pourcentages pondéraux se rapportent aux sommes des monomères mis en oeuvre.

3. Dispersion de copolymère à forte dilatance suivant la revendication 1 ou la revendication 2, dans laquelle les radicaux ester allylique ou ester alkylallylique sont choisis dans le groupe formé par l'acrylate d'allyle, l'acrylate d'alkylallyle, l'acrylate d'allylalkyle et l'acrylate d'alkylallylalkyle, ou d'un mélange de ceux-ci, où les radicaux alkyle possèdent, indépendamment les uns des autres, jusqu'à 4 atomes de carbone.

4. Dispersion de copolymère à forte dilatance suivant l'une quelconque des revendications 1 à 3, caractérisée par une teneur de 0,05 à 1 partie en poids, par rapport à 100 parties en poids de la substance solide du copolymère en émulsion, de peroxydes organiques dont les températures de décomposition se situent au-delà de 130°C pour une demi-durée de vie de 1 heure.

5. Dispersion de copolymère à forte dilatance suivant l'une quelconque des revendications 1 à 3, caractérisée par une teneur de 0,05 à 1 partie en poids, par rapport à 100 parties en poids de la substance solide du copolymère en émulsion, d'hydroperoxydes organiques dont les températures de décomposition sont supérieures à 130°C pour une demi-durée de vie de 1 heure.

6. Dispersion de copolymère à forte dilatance suivant au moins l'une quelconque des revendications 1 à 5, caractérisée par une teneur de 0,1 à 30 parties en poids, par rapport à 100 parties en poids de la substance solide du copolymère en émulsion, d'oxydes, d'hydroxydes, de carbonates, de sels solubles dans l' eau, de métaux monovalents ou bivalents, ou de mélanges de ceux-ci.

7. Procédé de préparation d'une dispersion de copolymère à forte dilatance suivant l'une quelconque des revendications 1 à 6, caractérisé en ce que l'on prépare le copolymère en émulsion aqueuse à partir de 0,1 à 10% en poids, rapportés à la somme des monomères mis en oeuvre, d'acides carboxyliques $\alpha,\beta$-monooléfiniquement insaturés, 5 à 30% en poids, rapportés à la somme des monomères mis en oeuvre, d'un carboxylate d'allyle ou d'un carboxylate d'alkylallyle, qui comporte deux ou plus de deux doubles liaisons oléfiniques, copolymérisables, ou un mélange de ceux-ci, où le radical alkyle contient de 1 à 4 atomes de carbone et d'autres monomères oléfiniquement insaturés.